# EUROPEAN PATENT APPLICATION

(11) **EP 2 184 102 A1**
(43) Date of publication of application: **12.05.2010**
(21) Application number: 08019673.6
(22) Date of filing: 11.11.2008
(51) Int. Cl.: B01J 19/00, C40B 40/14, C40B 50/00, C08B 37/00

(54) **Particle manufacturing method, particle libraries and use thereof**

(71) Applicant: Stichting Dutch Polymer Institute, 5612 AB Eindhoven (NL)
(72) Inventor: The designation of the inventor has not yet been filed
(74) Representative: Ackermann, Joachim

(57) **Abstract**

Disclosed is a method for generating a spatially addressably library of polymer particles. The method uses a direct-writing technique, such as inkjet printing, to cause the polymer to precipitate from a solution in a non-solvent thereof. By modification of chemical and/or physical parameters process-property relationships or formulation-property relationships of the particles formed can be studied with high efficiency.

## Description

### Disclosure

Particle manufacturing method, particle libraries and use thereof

This invention relates to the manufacture of particle libraries by a simple and efficient method, to the products obtained therewith and to the use of said products.

Particle dispersions, such as pharmaceutically active nanoparticle dispersions, are an important category of drug delivery systems, allowing for selective release and delivery of drugs in ways that are not otherwise possible. One of the most common methods of preparing drug-loaded particles involves the anti-solvent precipitation process, where a solution containing a drug and a polymer, and optionally other components, is treated with a second solvent that is incompatible with the solutes, causing them to precipitate as particles. A review over nanoparticle drug delivery systems for restenosis is given in Advanced Drug Delivery Reviews 24 (1997), pp. 63-85.

To-date, the development of new drug particle dispersions including active pharmaceutical ingredients remains a highly empirical, stochastic process. The precipitation process for the particles is dynamic, and the choice of organic solvents, the concentration of the polymer, and drug loading all affect physical properties of the final particles, including average size, shape, size distribution, polymorphic behavior, drug loading, bioavailability, drug release kinetics, and stability against degenerative processes, such as agglomeration, precipitation or Ostwald ripening all of which need to be well understood and accounted for during the development and validation of a new drug formulation being brought to market. The addition of stabilizers, adjuvants, surfactants compatibilizers, excipients, and other standard additives adds to the complexity of the systems. For such highly complex systems, the number of experiments necessary to understand the process-property or the formulation-property relationships grows quite rapidly with each added dimension; knowing this information is critical to timely product validation and process validation efforts for new products. Being able to perform these tasks up-front during the early stages of pharmaceutical development can save many months or even years of time during pre-clinical development. One of the primary applications of such "materials space mapping" is the optimization of a formulation, thus zeroing in on the "sweet spot", and understanding precisely the criticality of each system variable. Another reason for acquiring a solid, empirical understanding of a formulation is that it is critical to set meaningful material and process specifications, as well as product shelf life.

Up to now, formulation work for the preparation of particle suspensions has been done mostly manually, involving the preparation of small aliquots of solvent-nonsolvent systems, followed by characterization. Traditional, one-at-a-time experimental approaches of sequential formulation-characterization-reformulation are unsuitable for rapidly exploring the material space involved in drug delivery-based particles in a timely manner. For this reason, most experimental studies of such systems remain limited in their scope, studying the role of only one or two parameters, and true global optimization is never addressed of even attempted. Experiment designs involving parallel sample preparation and analysis allow for greater understanding of the systems, as well as offer the opportunity for performance predictability. In systems with higher dimensional numbers, the number of samples that can be prepared is limited, and means that exploration of the materials-processing space is limited.

In order to prepare the largest number of samples in the most reproducible, materially-efficient manner possible, it is recommendable that the sample preparation be miniaturized and automated. A recent example of this was reported in by the Langer group Nano Letters 2008, 8, 2906-12 and in J. Ind. Eng. Chem. Res. 2007, 46 8229-35, where microfluidics were used to prepare polymeric nanoparticles using a lab-on-a-chip device. While such a technique allows for the preparation of particles in a systemic expendient fashion, the nanoparticles are only measurable using in-line techniques, such as light scattering, and are not available as independent samples for further analysis later.

Nano Letters 2008, Vol. 8, No. 9, pp. 2906-12 discloses a microfluidic platform for controlled synthesis of polymeric nanoparticles. Nanoparticles are developed by mixing and subsequently precipitating polymers and drugs dissolved in a solvent by means of addition of nonsolvents. Disclosed is a rapid and tunable mixing through hydrodynamic flow focusing in microfluidic channels to control nanoprecipitation of selected diblock copolymers providing a polymeric biomaterial which may be used for drug delivery.

Inkjet printing is an interesting alternative for the production of polymer particles. This printing method has the advantage of low cost, ease of processing, potential for mass production and flexibility. Inkjet printing has already been used as a means for particle manufacture.

The use of inkjet printing as a means of high-throughput preparation tool for formulation arrays has gained considerable attention in recent years in a diverse range of disciplines, including such diverse applications as protein crystallography, microbe culture, fuel cell electrocatalysis and functional ceramics. The use of inkjet as a tool for high-throughput formulation screening has already been employed in industry, towards the combinatorial development of model drug microspheres, solid dosage forms and thin films for drug release. Hovever, while nanoparticle dispersion and suspension are frequently used as inks with inkjet printing, inkjet is not currently used as a means of preparing active ingredient containing particles.

Chemical Physics Letters 420 (2006) 480-3 discloses a novel approach of preparation an patterning of organic fluorescent nanomaterials. Different fluorescent organic nanoparticles from microemulsions were prepared with semi-continuous emulsion copolymerization of methylmethacrylate and a polymerizabel anionic surfactant. The obtained microemulsions were used as an ink in inkjet printing to form different patterns.

In Colloids and Surfaces A: Physicochem. Eng. Aspects 289 (2006), 96-104 the preparation of monodisperse polymer particles and capsules by inkjet printing has been disclosed.

EP 1 149 879 A2 discloses selected microemulsions for the manufacture of ink-jet inks.

WO 01/88046 A2 discloses ink-jet ink compositions based on selected oil-in-water microemulsions. These inks are used for printing different substrates and for forming nanoparticles upon application on a surface.

Langmuir 2006, 22 pp. 3506-13 discloses the control of colloidal particle deposit patterns within picoliter droplets ejected by ink-jet printing. Particle deposit morphologies that resulted from evaporation ink-jetted microdroplets were controlled by varying the ink compositions and concentrations. As an ink well-dispersed aqueous dispersion of monodisperse silica microspheres were used. Silica particle suspended in the microdroplet undergo self-assembly upon the evaporation of the solvent. Colloidal inks were printed onto hydrophilic and hydrophobic substrates as a function of the ink composition and concentration. The droplets deposited on the substrates were arranged as an array of separate droplets or in the form of a line. The pattern morphology and spatial distribuation of the resulting collodial silica deposits after drying were investigated with a scanning electron microscope or with a confocal laser-scanning microscope. In this reference the use of inkjet as a deposition technique for printing nanoparticle suspensions is disclosed but not the use of inkjet printing in the synthesis of nanoparticles. In addition, no polymer nanoparticles are used.

While ink-jet techniques have already been used to study the variation of process conditions on silica-containing products obtained, such investigations have not been used for the investigation of the formation conditions of polymer-active ingredient particles.

It is an objective of the present invention to provide a fast, simple and cost-efficient technique that allows systematic investigation of the process-property or the formulation-property relationships in the development of polymer-active ingredient particle systems.

In a first embodiment, the present invention relates to a process for generating a library of particles containing a polymer and optionally at least one additional ingredient, preferably at least one active ingredient, comprising the steps:
i) providing a solid substrate containing on at least one surface thereof a first variety of aliquots comprising a non-solvent for a polymer,
ii) providing a second variety of aliquots of solutions containing a polymer, a solvent for the polymer and optionally at least on additional ingredient, preferably at least one active ingredient, whereby the second variety of aliquots of solutions comprises a first solution, a second solution and optionally additional solutions which differ among each other in at least one chemical and/or physical parameter,
iii) adding the second variety of aliquots of solutions to the first variety of aliquots of non-solvent using a direct write technique, preferably ink-jet printing, to cause the polymer and optionally the at least one additional ingredient, preferably the at least one active ingredient, to precipitate in said non-solvent and to form a spatially addressable array, whereby
iv) the first, the second and the optionally additional solutions are added to different discrete portions of the first variety of aliquots.

In a second embodiment, the present invention relates to a process for generating a library of particles containing a polymer and optionally at least one additional ingredient, preferably at least one active ingredient, comprising the steps:
v) providing a solid substrate containing on at least one surface thereof a first variety of discrete aliquots of solutions containing a polymer, a solvent for the polymer and optionally at least one additional ingredient, preferably at least one active ingredient, whereby the first variety of discrete aliquots comprises a first solution, a second solution and optionally additional solutions which differ among each other in at least one chemical and/or physical parameter and which solutions are present in different discrete aliquots,
vi) providing a solution containg a non-solvent for the polymer or a second variety of discrete aliquots containing a non-solvent for the polymer, whereby the individual aliquots of the second variety of aliquots differ among each other in at least one chemical and/or physical parameter, and
vii) adding the non-solvent for the polymer or the second variety of discrete aliquots containing the non-solvent for the polymer to the first variety of discrete aliquots of solutions containing the polymer, the solvent for the polymer and optionally at least one additional ingredient, preferably at least one active ingredient, using a direct write technique, preferably ink-jet printing, to cause the polymer and optionally at least one additional ingredient, preferably at least one active ingredient, to precipitate in said non-solvent and to form a spatially addressable array.

The methods of this invention involve the application of a direct write technique, such as inkjet printing, to prepare spatially addressable libraries of particles. In these methods, the direct write technique is used to dispense the polymer solution into an antisolvent target substrate, or an antisolvent system for the polymer solution is dispensed using a direct write technique, such as inkjet printing, onto a solvent substrate.

In a preferred modification of the processes of this invention, the target substrate is also prepared by a direct write technique, preferably by inkjet printing.

In this way, high-density arrays of different particle formulations may be prepared into organized, spatially addressable arrays, which may be subsequently screened using conventional analytical techniques, such as spectroscopy, profilometry, and electron microscopic techniques, or using biological screening techniques.

In this way, thousands of samples may be readily prepared on a single substrate in an organized manner, and important data on the relationship between formulation, processing conditions and key physical characteristics are gathered.

Particles may be studied for the size, morphogoly and size distribution by spectroscopic methods, such as SEM, UV-VIS-spectroscopy, and dynamic light scattering, and they may be characterized for polymorphism, active-ingredient-excipient interaction, and active-ingredient loading using spectroscopic techniques, such as XRD, and Raman spectroscopy, or using other analytical techniques.

Additionally, the produced arrays can also be used as the basis for biological screening, including evaluation of cell affinity, cell differentiation, cell mobility, cytotoxicity, protein affinity, gene transfection efficiacy, gene knock-out I knock-in analysis, drug I marker *l* label / radiolabel absorption, ELISA, or cell signalling.

The invention also pertains to the particle libraries created by using the manufacturing methods of this invention.

In the process of this invention, generally any solid substrate can be used as long as it is capable of carrying a variety of discrete portions of non-solvents for the polymer applied or of polymer solutions. The shape of the substrate is not critical, provided it allows for direct-write technique application of droplets into the discrete portions placed on the surface of the substrate, and provided it allows for the investigation of the formed polymer particles. Preferably, the shape of the substrate is a plate or a circle with at least one planar surface. Alternatively, at least one of the surfaces can have a variety of discrete inlaid depressions or wells in the surface, to allow the droplets of the non-solvent solution and the polymer solution to be dispensed into said depressions.

The surface of the substrate where the non-solvent or the solutions are placed can be hydrophilic or hydrophobic. Preferably, this surface is non-porous to enable the variety of non-solvent or of the polymer solutions to be formed.

A large variety of substrates can be chosen for the methods of this invention. Non limiting examples include organic polymers, such as thermoplastic polymers or duroplastic polymers: inorganic materials, such as ceramic materials, glass or quartz; semi-conducting substrates, such as silicon, germanium or gallium-arsenide, or electrically conducting substrates, such as metals, carbon, electrically conducting metal oxides, such as indium-tin-oxide, electrically conducting metal salts, or electrically conducting organic materials, such as PEDOT.

Suitable substrates can possess a large variety of properties. For example, they can be transparent or non-transparent, or they can be crystalline or non-crystalline or they can contain adjuvants, such as pigments, antistatic agents, fillers, reinforcing materials, lubricants, processing aids and heat and/or light stabilizers.

Preferred substrates are films of organic polymers or plates made of glass or quartz, or substrates with electrically conductive surface layers, such as indium-tin-oxide layers.

In the methods of this invention, any polymer can be used as a particle forming material, as long as this is soluble in a solvent and as long as at least one non-solvent for this polymer exists. When the polymer solution becomes in contact with the non-solvent, the polymer will precipitate and will form particles. If additional ingredients, such as active ingredients, are present, the formed polymer particles may encapsulate the additional ingredient or may form a mixture with the additional ingredient also present in the solvent.

Examples of polymers are cellulose esters, such as cellulose acetate, polylactide, poly-(D,L-lactic-co-glycolic acid), polyglycolide, poly-epsilon-caprolactone, poly-(ethylene-co-glycolide), dextran esters, polyvinyl acetate, polyvinyl alcohol or modified polyvinyl alcohols, esters of polyacrylate or of polymethacrylate, as well as copolymers thereof.

Examples of additional ingredients include cosolvents to aid and control the nanoparticle organizing behavior, as well as nucleating agents, soft templates, and emulsifiers. Excipients, such as tripolyphosphate-complexed chitosan (see P. Calvo et al., J. Appl. Polym. Sci., 1997, 63, 125), and ionic surfactants, such as sodium dodecylsulfonate, taurocholic acid, phosphatidyl choline, and palmitoyl carnitine, anionic surfactants, such as Tween 80 and polysorbic acid, or release modifiers may also be used. Drug compatibilizers and release modifiers, such as cyclodextrins, may also be added.

Examples of active ingredients include agriculturally active ingredients, such as herbicides, fungicides, algicides, insecticides and/or miticides, phagocides, antibiotics, pharmaceutically active ingredients for humans and/or for animals, diagnostics agents for humans, plants and/or for animals, contrast agents, labelling agents, agents for gene transfection, and/or for gene transformation, enzymes, and catalytically active ingredients.

The selection of non-solvents and solvents depends on the system to be investigated. The solvent is selected according to the nature of the polymer and the additives to be investigated. Examples of polymer I solvent systems I non-solvent systems include, but are not limited to: cellulose acetate / dimethylacetamide / water; cellulose acetate / acetone / water, polylactic acid *l* acetonitrile / water; dextran propionate / DMSO / ethanol.

Examples of non-solvent I solvent systems are DMSO I water, ethanol / water, isopropanol / water, acetone / water, acetone / methanol, hexane / acetone, or toluene I acetone Preferably the non-solvent and the solvent are miscible within each other. But there are also systems possible where the non-solvent and the solvent are not miscible and form two discrete phases if brought into contact with each other.

In one embodiment of the process of this invention a first variety of aliquots of a non-solvent for a polymer is deposited on at least one surface of a substrate.

Preferably a matrix of solvent dots is deposited on the substrate surface. This can be done by any dispensing technique, for example by pipetting or preferably by an automatic deposition technique, such as ink-jet printing.

In this embodiment of the process of this invention, a second variety of aliquots of solutions containing a polymer and optionally an additional ingredient is provided. As an optional additional ingredient, these solutions may contain further active ingredients, adjuvants or excipients which are typical for the formulation under investigation. Examples of excipients are processing aids, lubricants, pigments, surface activating agents, fillers, antistatic agents, co-solvents, soft-templates, surfactants, thixotropic agents, emulsifiers, chelating agents, release modifiers, antioxidants, compatibilizing agents, plasticizers, nucleating agents, stabilizers, disintegrants, initiators, and crosslinking agents: examples of adjuvants are co-drugs.

This second variety of aliquots of solutions is formed of several solution aliquots, differing among each other in at least one chemical and/or physical parameter. Examples of chemical and/or physical parameter variation are the ratio of the volume of the combined solvent and non-solvent solutions, concentration of polymer, molecular weight and architecture of polymer and/or active ingredients, molecular weight distributions, type(s) of adjuvants and their concentration(s), ratio of polymer and active ingredient and solvent, choice of solvents and co-solvents, ionic strength, nature and amounts of added salts, temperature, viscosity, addition of soft templates and other processing agents, selection of droplet velocity and other droplet forming parameters. This variation of chemical and/or physical parameters in the different solutions of the second variety of solutions may be used to study the influence of said parameters to the formation and the properties of the particles formed.

In this embodiment of the process of this invention, the second variety of aliquots of solutions is added to the first variety of aliquots of non-solvent by using ink-jet printing. The non-solvent for the polymer and the solution containing the polymer are brought into contact with each other. If miscible solvents are used, the polymer solvent is mixed with the non-solvent. Therefore the polymer solubility decreases in this mixture, leading finally to a precipitation of the polymer in this mixture. If an active ingredient is present, the polymer particles formed contain at least a portion of the active ingredient also present in the polymer solution. The amount of additional ingredient and distribution within the polymer particles will depend on the nature of the system investigated. Some systems may cause all of the polymer and of the additional ingredient to precipitate from the solvent / non-solvent mixture; other systems may retain at least a portion of the polymer and/or of the additional ingredient in the solvent / non-solvent solution.

When the second variety of aliquots of the polymer solutions is added by a direct-write technique, such as ink-jet printing, to the first variety of aliquots of non-solvent of the polymer, then polymer solutions are added to the discrete spots of non-solvent which differ in at least one chemical and/or physical parameter. Thus, in the single spots of non-solvent, there are formed polymer particles under different conditions. One could use, for example, solutions of polymer which differ in the polymer concentration and could print a selected solution into a selected spot of non-solvent or into a limited number of selected spots of non-solvent. Thus, the polymer-based formulations precipitate in the individual, discrete spots of non-solvent and polymer particles are formed under different conditions, and are organized into spatially addressable patterns for subsequent use.

The second variety of aliquots of polymer solutions can be introduced as microdrops via the surface of the first variety of aliquots of non-solvent, or can be introduced directly into said first variety of aliquots of non-solvent. The generation of microdrops of the polymer solutions can be performed at a fixed location, while the substrate with the first variety of aliquots of the non-solvent is moved in a predetermined manner, or the direct-writing device, such as an ink-jet device, can be moved in a predetermined manner above the surface of the substrate containg the first variety of aliquots of non-solvent.

The formation of microdrops of the second variety of aliquots of polymer solutions and their introduction into the first variety of aliquots of non-solvent on the substrate can be performed by any direct-write technique, such as a drop-on-demand technique, or by any other technique being capable of forming microdrops.

A direct write technique is understood in this specification any software-controlled deposition of discrete aliquots of materials into specific patterns. Examples of direct-write techniques iniclude inkjet printing, including piezoelectric/acoustic and thermal inkjet techniques, as well as electrostatic continuous inkjet printing. Additional examples of direct-write techniques are micropen/contact printing, dip pen nanolithography, matrix-assisted pulsed-laser evaporation direct write technology, and additive laser-based direct write microfabrication techniques. An additional example of direct-write techniques is microvalve technology (both direct write and drop-on-demand). Direct-write techniques are known to the skilled artisan (compare "Direct Write Technologies for Rapid Prototyping Applications: In Sensors, Electronics and Integrated Power Sources" by Alberto Pique and Douglas B. Chrisey (2001), as well as "Direct Write Technology as a Tool to Rapidly Prototype Patterns of Biological and Electronic Systems").

Said direct-write techniques imply ejecting a discrete amount of liquid onto a specific location. An important feature of such direct-write technique for the process of this invention is its ability to eject uniform droplets. Preferred examples of jetting techniques are drop-on-demand inkjet techniques, such as thermal, piezoelectric, electrostatic or acoustic inkjet techniques, or other techniques for creating microdroplets, such as pneumatic microvalve technology. These technologies are known to those skilled in the art and are published, for example, in Tissue Engineering (2008). 14(1). 41-48, Pharm. Res. 8: 713-720 (1991) and Drug Development and Industrial Pharmacy (2001), 27(8), 825-829. Besides these methods, continuous inkjet techniques can be used, for example binary deflection-, multiple deflection-, and microdot-inkjet techniques. A preferred example of an applicable technique for step iii) is ink-jet printing using piezoelectric technique or using bubble-jet technique.

Inkjet printing enables microdrops to be prepared in general on the scale of 20-2.000 pL/droplet, depending on the printhead, printing conditions and ink. If a larger aliquot of liquid is desired than this range, certainly other techniques, such as syringe assisted dispensing, could be used, but simply using additional droplets is also prefectly viable.

Ink-jet printing is a preferred drop-on-demand method in the manufacturing process of this invention. This technique allows with high precision to rapidly dispense small aliquots of liquid. Size and shape of the droplets formed may be tuned by selecting the desired nozzle size, ink viscosity and droplet ejection conditions. Besides inkjet as the preferred method, automated syringe-assisted pumps can be used. These allow multi-microliter aliquots to be dispensed into spatially addressable arrays. The spatial resolution of this method is inferior to the inkjet method, but this method is useful in high throughput screening.

When the second variety of aliquots of polymer solutions is added to the first variety of aliquots of non-solvent present on the substrate, this can be performed by processing the different individual solutions via one printing device, or in the alternative, via several printing devices. A very preferred method to produce such an array with a single inkjet printer uses two inkjet nozzles in tandem: one nozzle is used to dispense the polymer-solvent solution, while the other handles the non-solvent solution. For example, nozzle "A" dispenses a droplet of non-solvent onto the array surface, consisting of a variety microdroplets of the non-solvent. Following immediately thereafter, "nozzle B° dispenses one or more microdroplets of a polymer-solvent mixture into the droplet, which mixes together, yielding a suspension of nanoparticles. In this fashion, "nozzle A" prints non-solvent, and then "nozzle B" prints the polymer solution into it. The number of droplets of each can be varied, creating the possibility to examine the effect of solvent/non-solvent ratios. By using micropipettes, the ink formulation in both nozzles can be switched between each spot, if desired.

In an alternative embodiment of the process of this invention, the sequence of steps referred to above can be reversed. Thus, the variety of discrete portions of different polymer solutions is placed on a substrate surface in a predetermined manner, and the non-solvent for the polymer is added in a subsequent step to the single dots, causing the polymer to precipitate from the polymer solution.

The polymer particles formed can have a broad range of particle shapes, sizes, size distribution and morphologies, depending on the system investigated and on the process parameters chosen.

Typical average particle diameters (D₅₀) are in a range between 1 nm and 100µm, preferably 1 nm - 1µm, very preferred 1 nm -100 nm and especially preferred 1 nm - 50 nm.

The process of this invention can advantageously be used to study the formation parameters of nanoparticles, thus of particles with a mean particle diameter (D₅₀ value) of less than 1 µm.

The particles formed in the process of this invention can be studies by using different analytical methods.

Examples of analytical methods are spectroscopical methods, such as UV-VIS spectrometry, FTIR-spectroscopy, Raman spectroscopy, surface-enhanced laser-desorption-ionization mass spectrometry, surface enhanced Raman microscopy, tip-enhanced Raman spectroscopy, X-ray fluorescence spectrometry, neutron scattering, and Auger analysis. Further examples are microscopy techniques, such as profilometry, confocal microscopy, scanning electron microscopy, tunneling electron microscopy, or field emission electron microscopy. Still further examples are other particle analysis techniques, such as dynamic light scattering and particle counting.

The equipment for performing the method of this invention can be chosen from known devices. Ink-jet printers, solution dispensing systems and analytical devices are known in the art and are commercially available.

With the processes of this invention, libraries of particles containing a polymer and optionally at least one additional ingredient, preferably an active ingredient, can be obtained. These libraries are novel and are also an object of this invention.

Such libraries may be used, for example, as templates for biological screening, including but not limited to such tests as cytotoxicity, cell affinity, protein affinity, drug release, metabolism studies, cell differentiation, motility studies, cell labeling, and ELISA.

Very preferred are libraries, wherein the particles are nanoparticles, most preferred nanoparticles comprising a polymer and a pharmaceutically active ingredient.

The libraries of this invention can be advantageously used in screening methods to study process-property relationships or formulation-property relationships of polymer-active ingredient systems. These uses are also object of the present invention.

Very preferred can the libraries of this invention be used in screening methods for formulation development.

The following Examples illustrate the invention without any limitation.

### Example 1

A series of solutions of propionylated dextrans were prepared from dimethyl acetamide, ranging in concentration from 0.1 wt-% to 4.0 wt-%. These solutions were then printed into standard SBS-formatted well plates containing 100 µL aliquots of distilled water, varying the number of droplets and the sequence of droplet concentration in each well. The resulting suspensions were then analyzed by dynamic light scattering to ascertain the role of the process and formulation changes on the size of the resulting particles.

In this Experiment three rows and six columns of the well plate were used. The actual results of this experiment for each sample of the well plate, including the printing conditions used, are included in the listing below. In each row of this listing concentration of the polymer solution, printer head voltage, pulse width, repetition rate, dot spacing within a sample (= different droplets are printed within a selected area of the respective sample), number of dots per sample, average particle diameter (determined by dynamic light scattering) and root mean square of the average particle diameter (in brackets) are indicated.
well plate row number 3
0.1 % propionyl dextran / 60 V / 45 µs pw / 200 Hz / 0.028mm² / 71 dots² / 229nm (0.253) .
0.1 % propionyl dextran / 65 V / 45 µs pw *l* 200 Hz / 0.028mm² / 71 dots² / 413nm (0.861)
0.1% propionyl dextran / 70 V *l* 45 µs pw / 200 Hz / 0.028mm² / 71 dots² / 466nm (0.454)
0.1 % propionyl dextran / 60 V / 45 µs pw / 200 Hz I single spot *l* 5,041 drops / 162nm (0.068)
0.1% propionyl dextran / 65 V / 45 µs pw *l* 200 Hz / I single spot / 5,041 drops / 148nm (0.254)
0.1% propionyl dextran *l* 70 V *l* 45 µs pw / 200 Hz I single spot / 5,041 drops I 163nm (0.198)
well plate row number 7
0.4% propionyl dextran / 60 V / 45 µs pw / 200 Hz / 0.028mm² / 71 dots² / 39347nm (0.822)
0.4% propionyl dextran / 65 V / 45 µs pw / 200 Hz / 0.028mm² / 71 dots² / 159nm (0.304)
0.4% propionyl dextran / 70 V / 45 µs pw / 200 Hz / 0.028mm² / 71 dots² / 182nm (0.281)
0.4% propionyl dextran / 60 V / 45 µs pw / 200 Hz / single spot / 5,041 drops *l* 2367nm (1.000)
0.4% propionyl dextran / 65 V / 45 µs pw / 200 Hz / single spot / 5,041 drops / 3655nm (1.000)
0.4% propionyl dextran / 70 V / 45 µs pw / 200 Hz / single spot / 5,041 drops / 26945nm (0.321)
well plate row number 8
4% propionyl dextran / 60 V / 45 µs pw / 200 Hz / 0.028mm² / 71 dots² *l -*
4% propionyl dextran / 65 V / 45 µs pw / 200 Hz / 0.028mm² / 71 dots² / 219nm (0.267)
4% propionyl dextran / 70 V / 45 µs pw / 200 Hz / 0.028mm² / 71 dots² / 169nm (0.276)
4% propionyl dextran / 60 V / 45 µs w / 200 Hz / single spot / 5,041 drops / 239nm (0.227)
4% propionyl dextran / 65 V / 45 µs pw / 200 Hz I single spot / 5,041 drops / 243nm (0.227)
4% propionyl dextran 170 V / 45 µs pw / 200 Hz I single spot / 5,041 drops / 228nm (0.315)

## Claims

1. A process for generating a library of particles containing a polymer comprising the steps:
i) providing a solid substrate containing on at least one surface thereof a first variety of aliquots comprising a non-solvent for a polymer,
ii) providing a second variety of aliquots of solutions containing a polymer and a solvent for the polymer, whereby the second variety of aliquots of solutions comprises a first solution, a second solution and optionally additional solutions which differ among each other in at least one chemical and/or physical parameter,
iii) adding the second variety of aliquots of solutions to the first variety of aliquots of non-solvent using a direct-write technique to cause the polymer to precipitate in said non-solvent and to form a spatially addressable array, whereby
iv) the first, the second and the optionally additional solutions are added to different discrete portions of the first variety of aliquots.

2. A process for generating a library of particles containing a polymer comprising the steps;
v) providing a solid substrate containing on at least one surface thereof a first variety of discrete aliquots of solutions containing a polymer and a solvent for the polymer, whereby the first variety of discrete aliquots comprises a first solution, a second solution and optionally additional solutions which differ among each other in at least one chemical and/or physical parameter and which solutions are present in different discrete aliquots,
vi) providing a solution containg a non-solvent for the polymer, or a second variety of discrete aliquots containing a non-solvent for the polymer, whereby the individual aliquots of the second variety of aliquots differ among each other in at least one chemical and/or physical parameter, and
vii) adding the non-solvent for the polymer or the second variety of discrete aliquots containing the non-solvent for the polymer to the first variety of discrete aliquots of solutions containing the polymer and the solvent for the polymer using a direct-write technique to cause the polymer to precipitate in said non-solvent and to form a spatially addressable array.

3. A process as claimed in claim 1 or 2, wherein at least one additional ingredient, preferably at least one active ingredient, is present in the solutions containing the polymer.

4. A process as claimed in claim 1 or 2, wherein the direct-write technique is a drop-on-demand-technique, preferably inkjet printing.

5. A process as claimed in claims 1 or 2, wherein the first variety of aliquots of the non-solvent or the first variety of discrete aliquots of the solutions containing a polymer are applied to the substrate by ink-jet printing.

6. A process as claimed in claims 1 or 2, wherein the spatially addressable arrays of particles containing the polymer are investigated by an analytical method, preferably by spectroscopy, by profilometry and/or by electron microscopic techniques.

7. A process as claimed in claims 1 or 2, wherein the particles formed possess an average particle diameter between 1 nm and 100 µm, especially preferred between 1 nm and 50 nm.

8. A process as claimed in claims 1 or 2, wherein the polymer is selected from the group consisting of cellulose esters, preferably cellulose acetate, polylactide, poly-(D,L-lactic-co-glycolic acid), polyglycolide, poly-epsilon-caprolactone, poly-(ethylene-co-giycolide), dextran esters, polyvinyl acetate, polyvinyl alcohol or modified polyvinyl alcohols, esters of polyacrylate or of polymethacrylate, as well as copolymers thereof.

9. A process as claimed in claim 3, wherein the active ingredient is selected from the group consisting of agriculturally active ingredients, pharmaceutically active ingredients, diagnostic agents, contrast agents, labelling agents, agents for gene transfection, agents for gene transformation, enzymes and catalytically active ingredients.

10. A process as claimed in claims 1 or 2, wherein the chemical and/or physical parameter is selected from the group of the concentration of the polymer, the concentration of the active ingredient, the ratio of active ingredient and polymer to the solvent, the ratio of the volume of the combined solvent and non-solvent solutions, the molecular weight and architecture of polymer and/or active ingredients, the molecular weight distributions, the type or types of adjuvants and their concentration or concentrations, the ratio of polymer and active ingredient and solvent, the choice of solvents and co-solvents, the ionic strength, the nature and amounts of added salts, the temperature, the viscosity, the addition of soft templates and other processing agents, the selection of droplet velocity and other droplet forming parameters.

11. A library of particles containing a polymer obtainable by the method of claims 1 or 2.

12. A library of claim 11, wherein the particles are nanoparticles, preferably nanoparticles comprising a polymer and a pharmaceutically active ingredient.

13. A library of claim 11, wherein the particles contain at least one additional ingredient.

14. Use of the library of claim 11 in a screening method to study process-property relationships or formulation-property relationships of the polymer-active ingredient system.

15. Use of claim 14 in a screening method for formulation development.
